# EUROPEAN PATENT APPLICATION

(11) **EP 4 212 969 A1**
(43) Date of publication of application: **19.07.2023**
(21) Application number: 22151271.8
(22) Date of filing: 13.01.2022
(51) Int. Cl.: G05B 15/02, G06Q 10/06

(54) **AUTOMATED ASSISSTED DETERMINATION OF A SEQUENCE OF ACTIONS IN AN AUTOMATION SYSTEM**

(71) Applicant: Siemens Aktiengesellschaft, 80333 München (DE)
(72) Inventor: GRIMM, Stephan, 81825 München (DE); VARRO, Andras, Lawrenceville, 08648 (US); WITTE, Martin, 91126 Schwabach (DE); QUIROS ARAYA, Gustavo Arturo, Princeton, 08540 (US)
(74) Representative: Horn Kleimann Waitzhofer Patentanwälte PartG mbB

(57) **Abstract**

The present invention suggests a computing system within an automation system to determine a goal state associated with a target application. The system can extract an initial state from the target application. Based on knowledge obtained by the system, the system can generate a plurality of plans. The plans can define respective sequences of actions for reaching the goal state from the initial state. The system can render options on a user interface of the target application. Based on the options, the system receives selections related to the sequences of actions so as to define selected actions. The system can perform the selected actions until the goal state is reached.

## Description

### BACKGROUND

Many industrial processes and machinery are monitored and controlled by operators or engineers using human-machine interface (HMI) screens. HMI screens can display information related to operational statuses of components. In some cases, HMI screens can render operational controls so that a user can control one or more monitored processes or components via the HMI screen. In automation engineering applications, for example, HMI screens can render sequences of interaction elements (e.g., clickable buttons, menus, etc.) for a user to select so as to define complex workflows. It is recognized herein that, in some cases, users require enormous experience to successfully navigate the complex sequences of interaction elements, so as to perform various automation engineering tasks. For example, experience can be required due to the complexity of the software applications or tools, and the degrees of freedom permitted to a user when using such tools.

In various software applications, wizards can assist users in navigating through selected, predefined workflows for automating some repetitive interaction patterns. It is recognized herein, however, that such conventional wizards are generally limited to few use cases that are hard-wired in a given wizard's implementation, such that user still needs to master the respective tool's complexity.

### BRIEF SUMMARY

Embodiments of the invention address and overcome one or more of the described-herein shortcomings by providing methods, systems, and apparatuses that can flexibly generate wizards. Such dynamic wizards can help various users, for instance users that know what they want to achieve in a given tool but do not know how to achieve their goal in terms of tool interaction or sequence of actions, to configure or control various devices or systems.

In an example aspect, a computing system within an automation system can determine a goal state associated with a target application. The goal state can define a final configuration or outcome associated with one or more devices within the automation system. The system can extract an initial state from the target application. The initial state can define a current configuration associated with the one or more devices within the automation system. To generate plans, various knowledge can be obtained or utilized. In particular, for example, the knowledge can define data associated with a domain of the automation system and data associated with workflows in the domain. Based on the knowledge, the system can generate a plurality of plans. The plans can define respective sequences of actions for reaching the goal state from the initial state. The system can render options on a user interface of the target application. Based on the options, the system receives selections related to the sequences of actions so as to define selected actions. The system can perform the selected actions until the goal state is reached. In particular, the system can perform the selected actions until the one or more devices in the automation system are configured according to the final configuration, or until the final outcome related to the system is attained.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 is a block diagram of an example computing system that includes a target application and a wizard planning module configured to interact with the target application, so as to generate dynamic wizards, in accordance with an example embodiment.
FIG. 2 is a flow diagram that depicts operations that can be performed by the computing system depicted in FIG. 1, in accordance with an example embodiment.
FIG. 3 illustrates a computing environment within which embodiments of the disclosure may be implemented.

### DETAILED DESCRIPTION

As an initial matter, it is recognized herein that various software applications include conventional wizards that typically include hard-coded implementations of a few selected and pre-defined interaction workflows that guide a user through steps for achieving a particular goal. For example, a device wizard for human machine interfaces (HMIs) associated with a totally integrated automation (TIA) portal might help users define the basic connections to controllers, but the screen structure and screen navigation might help with the functionalities. By way of further example, a drive wizard for a TIA portal might help a user configure the connection between a motor and controller. It is recognized herein, however, that such wizards are limited by the experience of the engineer who created the wizard. For example, the device wizard (or device configuration wizard) from TIA Windows Control Center (WinCC) might provide options to users for which steps they want to use and which features of the TIA portal they want to utilize. WinCC refers to a software component in the TIA portal that can be used to develop software to configure HMIs. It is further recognized herein that the dynamic behavior of conventional wizards is often realized by, and limited to, providing users with various settings, and then based on user selections of those settings, limit the path and steps the users can select. Thus, a technical problem addressed herein relates to generating dynamic wizards that are not limited to providing dynamics only in the form of options or choices for users to select, for instance in the form of drop-down lists, while the navigational structure of the wizard's workflow remains fixed or static.

In accordance with various embodiments described herein, dynamic wizards are generated in which the navigation structure of the wizard's workflow can change over time or based on domain knowledge. For example, domain knowledge can be captured in knowledge graphs that are based on ontologies. In some cases, domain knowledge concerning a given tool with associated wizard content can be combined with domain expert actions to plan for workflows, from which user-interface (UI) elements for a wizard can be derived. Alternative plans can result in multiple options from which the user can choose in a wizard element. In some examples, a wizard execution engine can then execute these wizard workflows and incorporate user selections, so as to complete configurations in the target tool. For purposes of example, embodiments are often described herein in the domain of automation engineering, though it will be understood that embodiments are not limited to a given tool or domain, as the domain knowledge and expert actions can vary as desired, and all such domains and associated expert actions are contemplated as being within the scope of this disclosure.

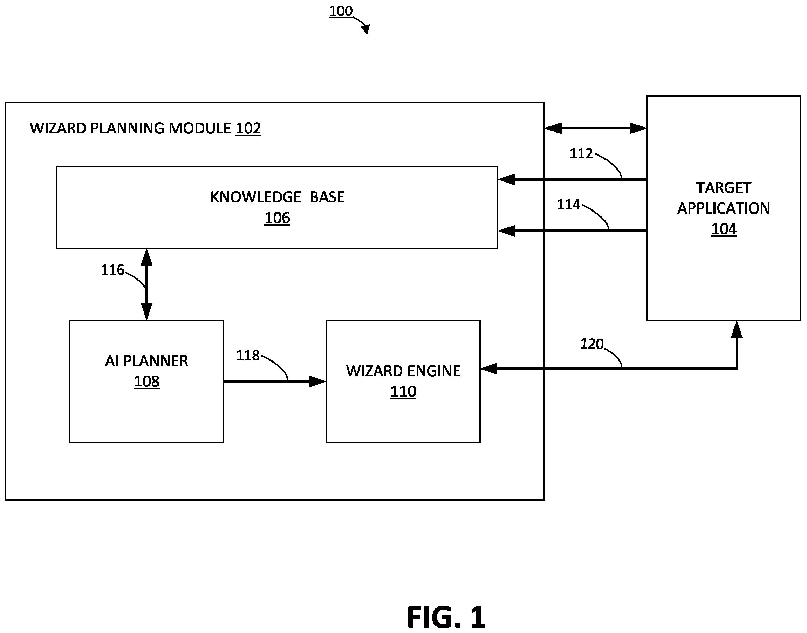

Referring initially to FIG. 1, an example industrial computing system 100 can be configured to generate dynamic wizards for various target applications. The computing system 100 can include one or more processors and memory having stored thereon applications, agents, and computer program modules including, for example, a wizard planning module 102 and one or more target applications 104 communicatively coupled to the wizard planning module 102. Further, the wizard planning module 102 can include one or more processors and memory having stored thereon applications, agents, and computer program modules that include, for example, a knowledge base 106, an artificial intelligence (AI) planner 108, and a wizard engine 110.

It will be appreciated that the program modules, applications, computer-executable instructions, code, or the like depicted in FIG. 1 are merely illustrative and not exhaustive, and that processing described as being supported by any particular module may alternatively be distributed across multiple modules or performed by a different module. In addition, various program module(s), script(s), plug-in(s), Application Programming Interface(s) (API(s)), or any other suitable computer-executable code may be provided to support functionality provided by the program modules, applications, or computer-executable code depicted in FIG. 1 and/or additional or alternate functionality. Further, functionality may be modularized differently such that processing described as being supported collectively by the collection of program modules depicted in FIG. 1 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 1 may be implemented, at least partially, in hardware and/or firmware across any number of devices.

In various examples, as further described herein, the target application 104 can interact with the wizard planning module 102, so as to automatically generate goal-driven wizard workflows that differ from hard-coded specific wizards in the target application 104 itself. In some cases, the target application 104 maintains the current configuration. By way of example, the target application 104 can include an automation engineering tool, such that the target application 104 maintains the current state of development defined by the automation engineering tool. In particular, in some cases, the target application exposes a programmatic interface, such as an application programming interface (API), to the wizard planning module 102. The interface can indicate or include operations that a conventional wizard might call inside the application 104. By way of example, and without limitation, the operations can add or remove a specific element to or from, respectively, the current configuration.

In various examples, the knowledge base 106 can include knowledge specific to various domains (domain knowledge) and knowledge associated with workflows or actions in the domain (workflow knowledge). In particular, for example, the domain knowledge can include data concerning a particular domain, for instance data or knowledge related to automation knowledge. The workflow knowledge can include possible operations that are offered by the interface of the target application 104. Such operations can be abstracted into actions, for instance actions in the Planning Domain Definition Language (PDDL), or PDDL actions, such that the AI planner 108 can learn and process the operations. Additionally, the knowledge base 106 can include situational knowledge that can reflect the inner configuration of the target application 104 in accordance with the specific domain associated with the domain knowledge. The situational knowledge can also indicate an anticipated or future state of the target application 104, which can be formulated in terms of PDDL domain knowledge predicates.

With continuing reference to FIG. 1, the AI planner 108 of the wizard planning module 102 can generate various plans based on a given planning problem described in the knowledge base 106. The plans from the AI planner 108 can be fed or input into the wizard engine 110. Based on user input, for instance successive user inputs, the wizard engine 110 can interpret and process the plans so as to execute wizard workflows. Thus, in accordance with various embodiments, wizards are generated instead of being preprogrammed. The wizards can be generated based on mathematical optimizations. For example, as further described herein, the AI planner 108 can generate a partial or full plan that defines actions from an initial state to a goal state. In particular, capabilities of the system associated with the target application 104 can be used by the AI planner 108 in the form of predicates and actions. The wizard engine 110 can then validate the execution of the planned actions and execute the planned actions. In some cases, the wizard engine 110 can provide interactions for a user (user interactions) to make selections or provide input to the wizard planning module 102.

In various embodiments, a flexible wizard, based on goal-driven workflows, is generated during runtime of the associated system. Referring to FIG. 1, at 112, a goal state (S_{g}) can be captured or retrieved from a system, in particular the target application 104 defined by the associated system. The goal state can define a goal or end result of a respective workflow. The goal state can be captured by the knowledge base 106 and categorized as situational knowledge. In some cases, the goal state is obtained in the form of a PDDL goal description. For example, an explicit user input, for instance via a form or the like, can automatically trigger the capturing of a PDDL goal description. Alternatively, or additionally, the wizard planning module 102 can define a recommender system that can automatically derive a desired goal as a recommendation from a current configuration of the associated system. Regardless of the automated manner in which the goal state is captured, a desired situation (or goal state) that is represented by the target application 104 can be transformed into the respective PDDL goal description, thereby making use of the predefined domain predicates. Predefined domain predicates can be defined in ontologies, and can indicate expert knowledge and/or capabilities related to the respective system. An example domain predicate is 'IsNetworkAddressDefined.' In some examples, such a predicate can be implemented by the goal state or by a given state that leads to the goal state. In an example, if the predicate evaluates to be true, the state (workflow) advances to the next predicate. Alternatively, if the predicate is not determined to be true, the wizard planning module 102, in particular the wizard engine 110, can perform an operation that is hooked-in the workflow so as to satisfy the predicate (e.g., 'SetNetworkAddress ?module ?ipaddress')

Still referring to FIG. 1, at 114, an initial state (Sᵢ) can be captured or retrieved from a system, in particular the target application 104 defined by the associated system. In particular, the initial state can be extracted from the current configuration of the system inside the target application 104. Similar to extracting the goal state, the wizard planning module 104, in particular the knowledge base 106, can transform relevant portions of the current configuration into a PDDL state description in terms of predefined domain predicates. By way of example, and without limitation, the current state might satisfy the 'IsNetworkAddressSpecified' predicate described above. At 116, the AI planner 108 can plan the sequences of actions that lead from the initial state to the goal state, so as generate a set of alternative plans. For example, the AI planner 108 can generate the set of valid plans that arrive at the goal state, based on the knowledge in the knowledge base 106. The knowledge base 106 can include or contain general knowledge about the domain, and situational knowledge that can include the state of the target application 104 and the goal state associated with the target application 104. The AI planner 108 can send or otherwise provide the set of alternative plans to the wizard engine 110, at 118.

Using the set of plans, at 120, the wizard engine 110 can execute a wizard workflow that can guide the user along a given plan to the goal state. In particular, the user can be guided to interact with the target application 104 to arrive at the goal state. For example, in some cases, the wizard engine 110 can interpret the plans and guide the user to the desired goal state by giving them options to choose and/or by asking for additional input required to perform an action, for instance via a programmatic interface of the target application 104. In various examples, the workflow knowledge that is part of the knowledge base 106 defines actions that map to operations in this interface. For example, the workflow knowledge can consist of actions. The AI planner 108 can construct the workflow from the actions of the workflow knowledge so as to define the possible paths that can be dependent on user input. The plans can be processed by the wizard planning module 102 according to different strategies in various examples. Each plan can define a respective first action having one or more associated options for proceeding to a second or subsequent action. The first action defines an initially executed action that is performed so as to move from the initial state directly to the goal state, or to move from the initial state to a subsequent state or stage that eventually leads to the goal state. The last actions defines an action that performed that results in the goal state from a state that directly precedes the goal state such that no other actions are performed after the last action.

In a static forward example, the wizard engine 110 can begin with first actions in each of the plans and present the different options to users associated with each of the first actions, so as to define a first level. Responsive to a user selection of one or more of the options associated with the first action, the wizard engine 110 can identify and indicate compatible subsequent actions at the next level from the first level. The wizard engine 110 can continue to select and indicate the subsequent actions that are compatible with user selections or user input until the end of the respective plan is reached. As used herein, unless otherwise specified, a compatible subsequent action refers to an action in a plan in which the preceding chose action was present. In some cases, in addition to rendering options responsive to user selections, the wizard engine 110 can respond to additional input from the user that may relate to an operation underlying the selected action.

In another example, which can be referred to as a forward strategy with re-planning example, the wizard engine 110 can again begin with the first actions in each plan and follow sequences to the respective end of each plan. In this example, however, the wizard engine 110 can trigger a re-planning that is performed by the AI planner 108. Such a re-planning can be triggered after one or more user selections. Each re-planning operation can be based on a modified initial state. The modified initial state defines the result of one or more actions being performed on the original initial state. For example, the actions that are performed can modify the system's states, so as to render the original initial state obsolete. Thus, a new or modified initial state can be used to continue with re-planning. Such re-planning can be performed when the future state of the system cannot be determined until one or more user selections are received. In an example, after a user makes a selection, knowledge associated with the selection becomes available, which effectively modifies the state. The re-planning can rely on the user selection and can plan ahead based on the user selection. In particular, in the example, instead of filtering out incompatible actions from plans having actions that were not chosen by the user, the wizard engine 110 can trigger a re-planning with a modified initial state that can be updated by effects (e.g., PDDL post-conditions) of a given action selected by a user. In some examples, the re-planning operation that is performed by the AI planner 108 can automatically filter ruled-out alternative plans without any extra filter algorithm inside the wizard engine 110. Thus, based on the user selections, the AI planner 108 can rule out or eliminate plans that do not conform to the user selections such that, in some cases, no specific filter algorithms need to be performed.

In another example, which can be referred to as a static backward strategy, the wizard engine 110 can begin at the end of the plans. The wizard engine 110 can consolidate the different final actions of the respective plans, so as to render a user respective choices. The wizard engine 110 can consolidate the actions that have the same effect in different plans. The actions that are candidates for consolidation can be identified during execution, by tracing the plans and eliminating actions that are not consolidated. In some cases, users can enter or input additional input related to the underlying operations of the selected actions. After the wizard engine 110 receives a given selection or input so as to define a selected action, the wizard engine 110 can determine an action that precedes the selected action, so as to move backward in the given plan. Further, based on the selected action, wizard engine 110 can filter out plans that do not contain the selected action, or plans that are otherwise not compatible with the user's section or input. The selections and input can be iteratively processed by the wizard engine 110 until the first actions of one or more plans that are not filtered out are reached.

In still another example, which can be referred to as a backward strategy with re-planning, the backward strategy described herein can be combined with the forward strategy with re-planning example described herein. In particular, the wizard engine 110 can traverse plans backwards and make calls to the AI planner 108 as it traverses the plans. In the example, the plans can maintain their same respective initial state, but the respective goal states can be adjusted or changed, for instance additional detail or specificity can be added to the goal states, to reflect conditions that result from selected actions.

In yet another example, which can be referred to as a backward-forward strategy, the wizard element can traverse plans backwards (e.g., from final action toward initial action) without rendering (e.g., displaying or presenting) certain wizard elements to the user. In some cases, for example, the wizard engine 110 builds a wizard workflow structure in memory, as it traverses plans backwards. After a given wizard workflow structure is generated or built, the wizard engine 110 can execute the workflow in a forward fashion. Thus, the user can encounter selections and steps in their natural forward order as they might be manually carried out in the target application 104 when no wizard is applied. In some cases, re-planning can also be utilized in this back-forward strategy.

In various examples, regardless of which strategy is applied, the actual execution of operations via an interface of the target application 104 can be decoupled from the presentation of wizard elements to the user for obtaining user selections and additional user input. The actual execution of operations can be performed in a forward fashion that respects the preconditions that might be modelled in the actions, for example, once the exact sequence of actions is determined, for instance when the user made their selections.

Referring again to FIG. 1, in an example, the wizard planning module 102 communicates with a user through a user interface (UI) that is decoupled from an interface with which the wizard planning module 102 and the target application 104 communicate. For example, the UI can define a web interface or other thin UI application. The interface between the wizard planning module 102 and the target application 104 can define a well-defined interface and an adapter. The adaptor can allow the wizard planning module 102 to communicate with different target applications, thereby enhancing flexibility, for example, so as to execute the actions required from the goal-driven wizard in the target application 104. In some cases, after a given plan is completed and is accepted by the user, the actions defined by the plan are executed in succession in the target application 104. While the actions or operations are performed in the target application 104, the results of the actions can be monitored by the wizard planning module 102, such that feedback is continuously provided to the user. The feedback can indicate a status of progress, an error status, a verification that the planned state is reached after each step, or the like.

Still referring to FIG. 1, by way of an automation engineering example, a user may want to add an appropriate function call for pre-checking air pressure of a pneumatic device into the code. Such an addition may, in some cases, be triggered by a previous recommendation from an assistant. In the example, the user might not know how to add the function call. In particular, the user might not know which actions need to be performed for including this function call. To illustrate the example, it can be assumed that the related workflow consists of two actions, though it will be understood that the workflow is simplified for purposes of explanation and workflows can consist of any number of actions, and all such workflows are contemplated as being within the scope of this disclosure. Continuing with the example, the required workflow can consist of actions, in particular, including a library that provides a function for air pressure check; and incorporating a call to this function into the code. It will be understood that in practice, in some cases, more steps might be required that involve the stipulation of the correct parameters and the exact place in the code, etc.

Continuing with the example introduced above, there might be different choices or selections that relate to suitable functions that may be in different libraries. By way of example, a first function call (FC1) may be in a first or pneumatic library (PneumaticLib), a second function call (FC2) may be in a second or general device library (GeneralDeviceLib), and a third function call (FC3) may be in a third or standard device library (StandardDeviceLib). In some examples, the first and second libraries may be added to a given user's project configuration (ProjectX), where their third library might already be included in the project configuration. Consequently, by way of example, if the user incorporates a call to FC3 for checking the pressure in the pneumatic device, the first step in the workflow may be skipped. In particular, a standard PDDL planner can be used on this input to generate alternative action plans, for instance three alternative action plans, as described further herein. Based on this output, an automatically generated wizard can present a suitable 2-step workflow to the user. In some cases, the wizard can also render options or selections pertaining to which library to include and which function to use from there, with an option of skipping the first step.

Continuing with the air pressure example, the domain knowledge (or the background knowledge in the domain of interest) in the knowledge base 106 may include:
- consistsOf(PneumaticLib, FC1), isA(FC 1, AirPresseureCheckFunction)
- consistsOf(GeneralDeviceLib, FC2), isA(FC2, AirPresseureCheckFunction)
- (StandardDeviceLib, consistsOf, FC3), isA(FC3, AirPresseureCheckFunction)

The situational knowledge in the knowledge base 106 may indicate an initial state and a goal state, such that plans can be generated based on the current project setup (initial state) and goals to be achieved (goal state). In the example, the initial state may include:
- consistsOf(ProjectX, ProgramX) //the program has no call to a function for air pressure check (maybe to others, which are not indicated here)
- includes(ProgramX, StandardDeviceLib) //the library for standard devices is already included (but no other libraries)

In the example, the goal state may include:
- consistsOf(ProjectX, ProgramX)
- consistsOf(ProgramX, ?FC),
   isA(?FC, AirPresseureCheckFunction) //the program makes a call to a
   function (? indicates a variable) that checks for air pressure

The knowledge base 106 may further include workflow knowledge, or actions, which may include, in accordance with the example:
- :includeLib(Program ?p, Library ?l)
   ∘ pre-condition: NOT(?p, includes, ?l)
   ∘ post-condition: (?p, includes, ?l)
- :incorporateFunctionCall(Program ?p, Function ?f)
   ∘ pre-condition: NOT(?p, consistsOf, ?f) AND ((?p, includes, ?l) AND (?l, consistsOf, ?f)) //is the function not already in the program and part of an included library
   ∘ post-condition: (?p, consistsOf, ?f) //then put it into the program

Continuing with the air pressure example, the domain knowledge (or the background knowledge in the domain of interest) in the knowledge base 106 may include:
Using the data described above (domain knowledge, situational knowledge, workflow knowledge) as input to the AI planner 108, various plans can be output from the AI planner 108. The plans can define alternative sequences of instantiated actions that lead from the initial state to the goal state. By way of example, the plans may include a first plan, a second plan, and a third plan. The first plan may include first and second actions, respectively:
- 1.:includeLibrary(ProgramX, PneumaticLib)
- 2. :incorporateFunctionCall(ProgramX, FC1)
   The second plan may include first and second actions, respectively:
- 1.:includeLibrary(ProgramX, GeneralDeviceLib
- 2. :incorporateFunctionCall(ProgramX, FC2)

The third plan may include the example action:
- 1.:incorporateFunctionCall(ProgramX, FC3)

Still continuing with the above-described air pressure example, the set of plans, in particular the first, second, and third plans, can be input into the wizard engine 100, from the AI planner 108. Based on the plans, the wizard engine 110 can derive or generate a wizard scheme. The wizard engine 110 can provide the wizard scheme to the target application 104, which can render the scheme to users via user options. In particular, for example, as a first step in the wizard scheme, the user can be presented with options for selecting or including libraries. A first option during this step may be to include the pneumatic library (PneumaticLib), a second option during this step may be to include the general device library (GeneralDeviceLib), and third option during this step may be to include no additional library. Continuing with the example, as a second step in the wizard scheme, the user can be presented with options for calling functions. A first option during this step may be to include the first function call (FC1), a second option during this step may be to include the second function call (FC2), and a third option during this step may be include the third function call (FC3). Based on the user selections made during step 1, different options can be rendered so as to define a step 3.

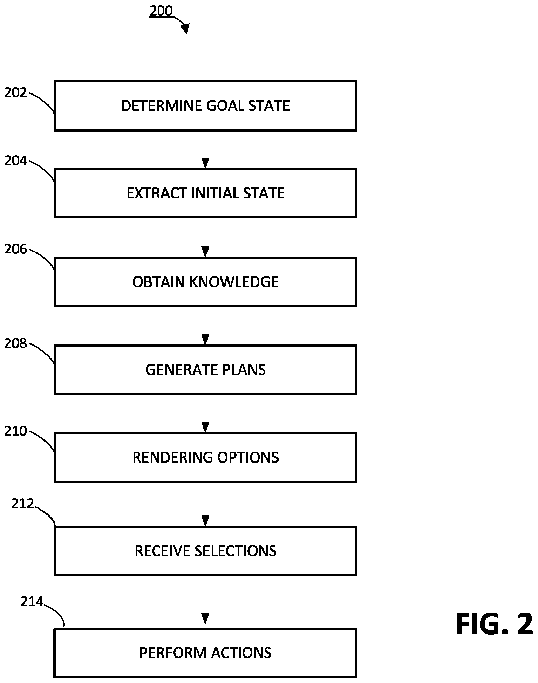

Referring now to FIG. 2, example operations 200 can be performed by the computing system 100. For example, at 202, a computing system within an automation system can determine a goal state associated with a target application. The goal state can define a final configuration or outcome associated with one or more devices within the automation system. At 204, the system can extract an initial state from the target application. The initial state can define a current configuration associated with the one or more devices within the automation system. At 206, to generate plans, various knowledge can be obtained or utilized. In particular, for example, the knowledge can define data associated with a domain of the automation system and data associated with workflows in the domain. Based on the knowledge, the system can generate a plurality of plans, at 208. The plans can define respective sequences of actions for reaching the goal state from the initial state. At 210, the system can render options on a user interface of the target application. Based on the options, at 212, the system receives selections related to the sequences of actions so as to define selected actions. At 214, the system can perform the selected actions until the goal state is reached. In particular, the system can perform the selected actions until the one or more devices in the automation system are configured according to the final configuration, or until the final outcome related to the system is attained.

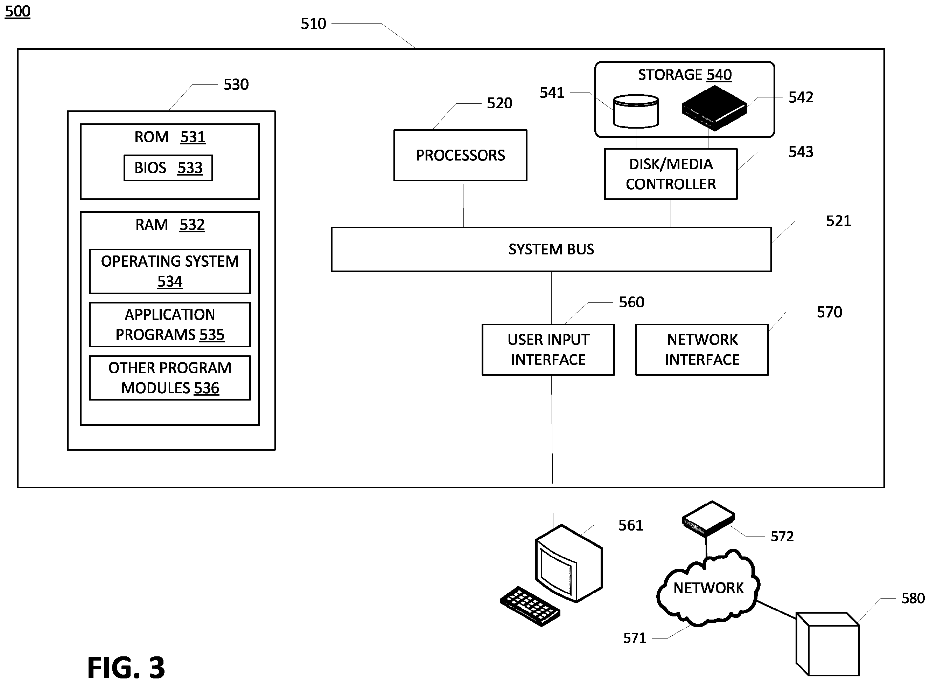

FIG. 3 illustrates an example of a computing environment within which embodiments of the present disclosure may be implemented. A computing environment 500 includes a computer system 510 that may include a communication mechanism such as a system bus 521 or other communication mechanism for communicating information within the computer system 510. The computer system 510 further includes one or more processors 520 coupled with the system bus 521 for processing the information. The wizard planning module 102 may include, or be coupled to, the one or more processors 520.

The processors 520 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 520 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 521 may include at least one of a system bus, a memory bus, an address bus, or a message bus, and may permit exchange of information (e.g., data (including computer-executable code), signaling, etc.) between various components of the computer system 510. The system bus 521 may include, without limitation, a memory bus or a memory controller, a peripheral bus, an accelerated graphics port, and so forth. The system bus 521 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 3, the computer system 510 may also include a system memory 530 coupled to the system bus 521 for storing information and instructions to be executed by processors 520. The system memory 530 may include computer readable storage media in the form of volatile and/or nonvolatile memory, such as read only memory (ROM) 531 and/or random access memory (RAM) 532. The RAM 532 may include other dynamic storage device(s) (e.g., dynamic RAM, static RAM, and synchronous DRAM). The ROM 531 may include other static storage device(s) (e.g., programmable ROM, erasable PROM, and electrically erasable PROM). In addition, the system memory 530 may be used for storing temporary variables or other intermediate information during the execution of instructions by the processors 520. A basic input/output system 533 (BIOS) containing the basic routines that help to transfer information between elements within computer system 510, such as during start-up, may be stored in the ROM 531. RAM 532 may contain data and/or program modules that are immediately accessible to and/or presently being operated on by the processors 520. System memory 530 may additionally include, for example, operating system 534, application programs 535, and other program modules 536. Application programs 535 may also include a user portal for development of the application program, allowing input parameters to be entered and modified as necessary.

The operating system 534 may be loaded into the memory 530 and may provide an interface between other application software executing on the computer system 510 and hardware resources of the computer system 510. More specifically, the operating system 534 may include a set of computer-executable instructions for managing hardware resources of the computer system 510 and for providing common services to other application programs (e.g., managing memory allocation among various application programs). In certain example embodiments, the operating system 534 may control execution of one or more of the program modules depicted as being stored in the data storage 540. The operating system 534 may include any operating system now known or which may be developed in the future including, but not limited to, any server operating system, any mainframe operating system, or any other proprietary or non-proprietary operating system.

The computer system 510 may also include a disk/media controller 543 coupled to the system bus 521 to control one or more storage devices for storing information and instructions, such as a magnetic hard disk 541 and/or a removable media drive 542 (e.g., floppy disk drive, compact disc drive, tape drive, flash drive, and/or solid state drive). Storage devices 540 may be added to the computer system 510 using an appropriate device interface (e.g., a small computer system interface (SCSI), integrated device electronics (IDE), Universal Serial Bus (USB), or FireWire). Storage devices 541, 542 may be external to the computer system 510.

The computer system 510 may also include a field device interface 565 coupled to the system bus 521 to control a field device 566, such as a device used in a production line. The computer system 510 may include a user input interface or GUI 561, which may comprise one or more input devices, such as a keyboard, touchscreen, tablet and/or a pointing device, for interacting with a computer user and providing information to the processors 520.

The computer system 510 may perform a portion or all of the processing steps of embodiments of the invention in response to the processors 520 executing one or more sequences of one or more instructions contained in a memory, such as the system memory 530. Such instructions may be read into the system memory 530 from another computer readable medium of storage 540, such as the magnetic hard disk 541 or the removable media drive 542. The magnetic hard disk 541 (or solid state drive) and/or removable media drive 542 may contain one or more data stores and data files used by embodiments of the present disclosure. The data store 540 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 520 may also be employed in a multi-processing arrangement to execute the one or more sequences of instructions contained in system memory 530. In alternative embodiments, hard-wired circuitry may be used in place of or in combination with software instructions. Thus, embodiments are not limited to any specific combination of hardware circuitry and software.

As stated above, the computer system 510 may include at least one computer readable medium or memory for holding instructions programmed according to embodiments of the invention and for containing data structures, tables, records, or other data described herein. The term "computer readable medium" as used herein refers to any medium that participates in providing instructions to the processors 520 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 541 or removable media drive 542. Non-limiting examples of volatile media include dynamic memory, such as system memory 530. Non-limiting examples of transmission media include coaxial cables, copper wire, and fiber optics, including the wires that make up the system bus 521. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 500 may further include the computer system 510 operating in a networked environment using logical connections to one or more remote computers, such as remote computing device 580. The network interface 570 may enable communication, for example, with other remote devices 580 or systems and/or the storage devices 541, 542 via the network 571. Remote computing device 580 may be a personal computer (laptop or desktop), a mobile device, a server, a router, a network PC, a peer device or other common network node, and typically includes many or all of the elements described above relative to computer system 510. When used in a networking environment, computer system 510 may include modem 572 for establishing communications over a network 571, such as the Internet. Modem 572 may be connected to system bus 521 via user network interface 570, or via another appropriate mechanism.

Network 571 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 510 and other computers (e.g., remote computing device 580). The network 571 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 571.

It should be appreciated that the program modules, applications, computer-executable instructions, code, or the like depicted in FIG. 3 as being stored in the system memory 530 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 510, the remote device 580, and/or hosted on other computing device(s) accessible via one or more of the network(s) 571, may be provided to support functionality provided by the program modules, applications, or computer-executable code depicted in FIG. 3 and/or additional or alternate functionality. Further, functionality may be modularized differently such that processing described as being supported collectively by the collection of program modules depicted in FIG. 3 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 3 may be implemented, at least partially, in hardware and/or firmware across any number of devices.

It should further be appreciated that the computer system 510 may include alternate and/or additional hardware, software, or firmware components beyond those described or depicted without departing from the scope of the disclosure. More particularly, it should be appreciated that software, firmware, or hardware components depicted as forming part of the computer system 510 are merely illustrative and that some components may not be present or additional components may be provided in various embodiments. While various illustrative program modules have been depicted and described as software modules stored in system memory 530, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method performed by a computing system within an automation system, the method comprising:
determining a goal state associated with a target application, the goal state defining a final configuration or outcome associated with one or more devices within the automation system;
extracting an initial state from the target application, the initial state defining a current configuration associated with the one or more devices within the automation system;
obtaining knowledge, the knowledge defining data associated with a domain of the automation system and data associated with workflows in the domain;
based on the knowledge, generating a plurality of plans, the plans defining a sequence of actions for reaching the goal state from the initial state;
rendering options on a user interface of the target application;
based on the options, receiving selections related to the sequence of actions so as to define selected actions; and
performing the selected actions until the goal state is reached.

2. The method as recited in claim 1, wherein determining the goal state further comprises:
based on the knowledge, identifying a goal description in a Planning Domain Definition Language (PDDL).

3. The method as recited in claim 1, wherein determining the goal state further comprises deriving the goal state from the current configuration, so as to define a recommendation based on the current configuration.

4. The method as recited in claim 1, wherein extracting the initial state further comprises transforming the current configuration into a Planning Domain Definition Language (PDDL) state description in terms of predefined domain predicates.

5. The method as recited claim 1, wherein rendering options further comprises:
based on the initial state, determining respective first actions associated with each of the plurality of plans; and
rendering options associated with each of the first actions.

6. The method as recited in claim 5, the method further comprising:
receiving a first selection related to the first actions; and
based on the first selection, determining one or more subsequent actions that lead to the goal state.

7. The method as recited in claim 6, the method further comprising:
based on the first selection, determining a new initial state so as to define a modified initial state; and
generating a new plurality of plans so as to perform replanning, the new plurality of plans each defining a sequence of actions for reaching the goal state from the modified initial state.

8. A computing system associated with an automation system, the computing system comprising:
a processor; and
a memory storing instructions that, when executed by the processor, cause the processor to:
determine a goal state associated with a target application, the goal state defining a final configuration or outcome associated with one or more devices within the automation system;
extract an initial state from the target application, the initial state defining a current configuration associated with the one or more devices within the automation system;
obtain knowledge, the knowledge defining data associated with a domain of the automation system and data associated with workflows in the domain;
based on the knowledge, generate a plurality of plans, the plans defining a sequence of actions for reaching the goal state from the initial state;
render options on a user interface of the target application;
based on the options, receive selections related to the sequence of actions so as to define selected actions; and
perform the selected actions until the goal state is reached.

9. The system as recited in claim 8, the memory storing further instructions that, when executed by the processor, further cause the processor to:
based on the knowledge, identify a goal description in a Planning Domain Definition Language (PDDL).

10. The system as recited in claim 8, the memory storing further instructions that, when executed by the processor, further cause the processor to:
derive the goal state from the current configuration, so as to define a recommendation based on the current configuration.

11. The system as recited in claim 8, the memory storing further instructions that, when executed by the processor, further cause the processor to:
transform the current configuration into a Planning Domain Definition Language (PDDL) state description in terms of predefined domain predicates.

12. The system as recited in claim 8, the memory storing further instructions that, when executed by the processor, further cause the processor to:
based on the initial state, determine respective first actions associated with each of the plurality of plans; and
render options associated with each of the first actions.

13. The system as recited in claim 12, the memory storing further instructions that, when executed by the processor, further cause the processor to:
receive a first selection related to the first actions; and
based on the first selection, determine one or more subsequent actions that lead to the goal state.

14. The system as recited in claim 13, the memory storing further instructions that, when executed by the processor, further cause the processor to:
based on the first selection, determine a new initial state so as to define a modified initial state; and
generate a new plurality of plans so as to perform replanning, the new plurality of plans each defining a sequence of actions for reaching the goal state from the modified initial state.

15. A non-transitory computer-readable storage medium including instructions that, when processed by a computing system, configure the computing system to perform the method according to any one of claims 1 to 7.
